# EUROPÄISCHE PATENTSCHRIFT

(11) **EP 1 782 331 B1**
(45) Veröffentlichungstag und Bekanntmachung des Hinweises auf die Patenterteilung: **31.01.2018**
(21) Anmeldenummer: 05776911.9
(22) Anmeldetag: 11.08.2005
(51) Int. Cl.: G06K 19/07, H02J 7/02, G06K 7/00

(54) **BIDIREKTIONALER, KONTAKTLOSER LADEVORGANG ZWISCHEN MEHREREN AKKUMULATOREN**
USER INPUT DEVICE INCLUDING USER INPUT EVALUATION AND METHOD
DISPOSITIF D'ENTREE D'UTILISATEUR A EVALUATION D'ENTREES D'UTILISATEUR ET PROCEDE.

(30) Priorität: 16.08.2004 DE 102004039650; 16.08.2004 DE 102004039648
(43) Veröffentlichungstag der Anmeldung: 09.05.2007
(73) Patentinhaber: Giesecke+Devrient Mobile Security GmbH, 81677 München (DE)
(72) Erfinder: FINKENZELLER, Klaus, 85774 Unterföhring (DE); NESS, Werner, 85716 Unterschleissheim (DE)
(86) Internationale Anmeldenummer: PCT/EP2005/008755
(87) Internationale Veröffentlichungsnummer: WO 2006/018229

(56) Entgegenhaltungen:
- WO-A-99/43096
- WO-A-2004/055654
- DE-A1- 10 028 839
- US-A1- 2003 178 967
- US-A1- 2005 068 019

## Beschreibung

Die vorliegende Erfindung betrifft ein Verfahren, eine Vorrichtung und ein System zum Aufladen eines Akkumulators eines Gerätes und dabei insbesondere ein kontaktloses Aufladen für einen Akkumulator in einem tragbaren Datenträger.

Tragbare Datenträger, wie beispielsweise Chipkarten oder Transponder, sind bisher vorwiegend auf eine externe Energieversorgung angewiesen. Zur Energieversorgung eines batterielosen Transponders wird üblicherweise ein hochfrequentes magnetische Wechselfeld eines RFID-Lesegerätes (typische Frequenzen: 125 kHz, 13,56 MHz) verwendet. Hierzu wird eine durch das magnetische Wechselfeld in der Antennenspule des Transponders induzierte Wechselspannung gleichgerichtet und dem Transponder als Versorgungsspannung zugeführt. Zur Spannungsregelung im Transponder werden sogenannte Shuntregler eingesetzt. Hierbei wird überschüssige Energie in einen Shuntwiderstand geleitet und in Wärme umgesetzt.

Um einen von einer externen Energieversorgung unabhängigen Betrieb eines tragbaren Datenträgers zu ermöglichen, können tragbare Datenträger mit einer Batterie versehen sein. Insbesondere für Transponder oder kontaktlose Chipkarten sollte ein Aufladen der Batterie durch eine Ladevorrichtung auch kontaktlos, also nicht über eine entsprechende elektrisch leitende Kontaktierung, möglich sein.

Für kontaktlose Ladevorrichtungen ist es bekannt, die durch eine enge magnetische Kopplung (Spulen mit Ferritkern) übertragene Energie zum Aufladen eines Akkumulators einzusetzen. Eine solche Anordnung wird zum Beispiel häufig bei elektrischen Zahnreinigungsvorrichtungen eingesetzt, um das Handteil ohne einen nach außen geführten galvanischen Kontakt mit Energie zum Aufladen des Akkumulators versorgen zu können.

Bekannt nach dem Stand der Technik sind Verfahren zur Datenübertragung im Nahbereich, wie beispielsweise NFC (Near Field Communication). Bei NFC handelt es sich um ein Übertragungsverfahren mittels magnetischer Felder im Frequenzbereich 13.56 MHz. Die typische Reichweite von NFC-Geräten beträgt etwa 20 cm. Die eingesetzten Verfahren zur Datenübertragung sind denen kontaktloser Chipkarten sehr ähnlich. NFC-Geräte sind daher auch in der Lage mit kontaktlosen Chipkarten zu kommunizieren, oder eine kontaktlose Chipkarte zu simulieren (Erzeugung einer Lastmodulation). Die NFC-Spezifikation sieht neben einem "peer-to-peer"-Betrieb, bei dem beide Kommunikationsteilnehmer abwechselnd senden, auch eine Betriebsart vor, bei dem ein erstes NFC-Gerät in einen permanenten Sendebetrieb wechselt ("being reader") und ein zweites NFC-Gerät eine kontaktlose Chipkarte simuliert ("being card"), um auf diesem Wege per Lastmodulation mit dem ersten Gerät kommunizieren zu können. Für die Feldstärken eines Trägersignals und der entsprechenden Seitenbänder eines NFC-Gerätes sind Grenzwerte definiert, welche die abgestrahlte Leistung des NFC-Gerätes nicht überschreiten darf. Somit ist auch die Feldstärke eines zur Energieübertragung einsetzbaren Feldes begrenzt.

Um eine verbesserte induktive Kopplung zwischen einer Chipkarte mit Antennenspule und einer Ladevorrichtung zu erzielen, verwendet DE 199 40 561 C1 als Ladevorrichtung einen Stift mit Ferritkern und Sendespule. Der Stift wird zur Energieübertragung in ein Loch in der Chipkarte geführt, welches im Bereich der Antenntenspule angeordnet ist.

Das US-Patent US 6,275,681 B1 zeigt ein Verfahren zum kontaktlosen Aufladen der Energieversorgungseinheit einer Chipkarte mittels einer elektrostatischen Ladevorrichtung eines Chipkartenlesegerätes. Die Chipkarte umfaßt dabei eine Steuereinheit, welche abhängig vom Ladezustand der Energieversorgungseinheit dessen Aufladen steuert, sofern eine ausreichende Spannungsversorgung anliegt. Die Information, ob ein Aufladen vollständig oder unvollständig erfolgt ist, kann von der Chipkarte zum Lesegerät übertragen und einem Benutzer der Chipkarte angezeigt werden.

In DE 10028839 A1 wird die Batterie eines schnurlosen Telefons geladen über entsprechende Kontakte einer Basisstation. WO 2004/055654 A2 zeigt eine mit den Spannungsversorgungskontakten eines Mobilfunkgerätes verbindbare Einheit, die kontaktlos Energie empfängt. US 2005/0068019 A1 zeigt ein kontaktloses Ladegerät für Notebooks oder Mobilfunkgeräte. Ein Terminal, welches seine Sendeleistung für eine kontaktlose Kommunikation mit einem tragbaren Datenträger anpasst, beschreibt WO 99/43096 A1.

US 2003/0178967 A1 zeigt die Merkmale des Oberbegriffs von Anspruch 1.

Im Vergleich zu kontaktbehafteten Vorgängen ist bei kontaktlosen Vorgängen die zeitliche Dauer des Vorgangs besonders kritisch. Ein Benutzer wird seine Chipkarte beispielsweise bewußt nicht beliebig lange in dem Bereich eines Lesegerätes halten oder mit einer erhöhten Wahrscheinlichkeit unbewußt aus dem Kommunikationsbereich des Lesegerätes entfernen.

Es ist daher die Aufgabe der vorliegenden Erfindung ein Verfahren, ein System und eine Vorrichtung für ein schnelleres kontaktloses Aufladen eines Energiespeichers in einem Gerät bereit zu stellen.

Diese Aufgabe wird gelöst durch die Gegenstände der unabhängigen Ansprüche. Abhängige Ansprüche sind auf bevorzugte Ausführungsformen der Erfindung gerichtet.

Gemäß einem Ansatz der vorliegenden Erfindung wird ein Gerät nicht entweder als Energiequelle oder als Energiesenke betrieben, sondern kann in einem ersten Betriebsmodus als Energiequelle und in einem zweiten Betriebsmodus als Energiesenke eingesetzt werden. Eine solche Ausgestaltung erhöht in einem System die Zahl der möglichen Energiequellen und folglich wird eine Energiesenke mit einer größeren Wahrscheinlichkeit und daher insgesamt auch schneller wieder aufgeladen werden.

Gemäß einem Verfahren in einem solchen System mit zumindest zwei Einheiten zum kontaktlosen Aufladen eines Energiespeichers einer Energiesenke durch eine Energiequelle werden zunächst Daten zwischen den zwei Einheiten übertragen. Eine für das Aufladen notwendige Energie wird von der Energiequelle zu der Energiesenke über ein Wechselfeld übertragen. Zumindest einen der beiden Einheiten kann in einem ersten Betriebsmodus als Energiequelle und in einem zweiten Betriebsmodus als Energiesenke eingesetzt werden.

So kann beispielsweise ein tragbarer Datenträger, der in einem mobilen Endgerät mit wieder aufladbarer Batterie eingesetzt ist, gegenüber einem weiteren tragbaren Datenträger als Energiequelle und gegenüber einem Lesegerät mit konstanter Stromversorgung als Energiesenke auftreten.

Gemäß einer bevorzugten Ausgestaltung des Verfahrens wird in dem Schritt der Datenübertragung bestimmt, ob die zumindest eine Einheit in dem Schritt der Energieübertragung in dem ersten oder in dem zweiten Betriebsmodus arbeitet. Somit kann die Rollenverteilung abhängig von übertragenen Daten gestaltet werden. Dadurch ist gegenüber der üblichen vom Gerätetyp abhängigen vorab festliegenden Rollenverteilung auch eine einsatzabhängige Rollenverteilung möglich. So kann beispielsweise eine Chipkarte mit Solarmodul, Batterie und kontaktloser Schnittstelle ausschließlich als Notlösung zum temporärem Aufladen einer entladenen Batterie eines Mobilfunkgerätes vorgesehen sein.

Es ist besonders vorteilhaft, zwischen den Einheiten eine Rolleninformation auszutauschen, die angibt ob die entsprechende Einheit bevorzugt als Energiequelle oder als Energiesenke betrieben werden soll. Durch die Übertragung eines einzelnen Wertes kann somit nicht nur kodiert werden, ob die Einheit nur einen der beiden Betriebsmodi oder beide Betriebsmodi unterstützt, sondern zudem ob die Einheit bevorzugt als Energiequelle oder Energiesenke betrieben werden möchte.

Alternativ oder in Ergänzung zur Übertragung einer Rolleninformation kann ein Wert übertragen werden, der angibt, wieviel frei verfügbare Energie eine Einheit bereitstellen kann bzw. wieviel Energie zum Laden der Einheit benötigt wird.

In einer bevorzugten Ausgestaltung des Verfahrens wird in einem ersten Verfahrensschritt eine Rolleninformation von einer ersten zu einer zweiten Einheit übertragen. In der zweiten Einheit wird die empfangene Rolleninformation mit der eigenen Rolleninformation der zweiten Einheit verglichen, um zu entscheiden ob die Einleitung eines Ladevorganges - möglicherweise abhängig von weiteren Daten - durch die erste oder die zweite Einheit eingeleitet wird. Auf diesem Weg kann die Menge der für die Einleitung eines Ladevorganges zu übertragenden Daten begrenzt werden.

Gemäß einem weiteren Ansatz der vorliegenden Erfindung wird einem Benutzer des tragbaren Datenträgers die Effizienz des Aufladevorgangs signalisiert. Der Benutzer erhält somit eine Rückmeldung über die Kopplung des tragbaren Datenträgers mit dem Wechselfeld und kann diese optimieren.

In einer bevorzugten Ausführungsform wird dem Benutzer die Effizienz des Aufladevorgangs optisch durch die Energiequelle angezeigt. Alternativ hierzu kann eine optische Anzeige auf dem tragbaren Datenträger angeordnet sein, insbesondere um bei gleichzeitigem Aufladen mehrerer tragbarer Datenträger durch eine Energiequelle wirklich starke Kopplungen anzeigen zu können.

Alternativ wird die Effizienz des Aufladevorgangs dem Benutzer akustisch signalisiert.

In einer weiter verbesserten Ausgestaltung des Verfahrens wird dem Benutzer ebenfalls eine Richtung signalisiert, in welcher er den tragbaren Datenträger bewegen müßte, um die Effizienz des Aufladevorgangs zu verbessern. Zu diesem Zweck kann auf der Energiequelle ein optischer Geber und auf dem tragbaren Datenträger ein optischer Empfänger angeordnet sein. Das Signal des optischen Empfängers wird dabei ausgewertet um die Effizienz des Ladevorgangs zu ermitteln und eine Bewegungsrichtung für eine Verbesserung der Effizienz zu bestimmen.

Es ist besonders vorteilhaft, den optischen Geber als visuell sichtbare Lichtquelle auszugestalten, die sowohl die Effizienz des Ladevorgangs signalisiert, als auch für die Bestimmung einer notwendigen Bewegungsrichtung verwendbar ist.

Die Effizienz des Aufladevorgangs kann in einer Ausgestaltung des Verfahrens bestimmt werden, aus dem Verhältnis einer aktuellen Aufladungsintensität zu einer maximal für einen Ladevorgang gemessenen Ladeintensität. Gemäß einer alternativen Ausgestaltung wird die Effizienz des Aufladevorgangs aus dem Verhältnis einer aktuellen Aufladungsintensität zu einer maximal für einen Ladevorgang möglichen Ladeintensität bestimmt, die insbesondere einer Ladeintensität bei maximaler Kopplung und maximaler magnetischer Feldstärke entspricht.

Die Erfindung und weitere vorteilhafte Ausführungsformen werden nachstehend anhand der Zeichnungen näher erläutert. Die Figuren zeigen:
- Fig. 1: eine schematische Darstellung der Komponenten Energiequelle und Energiesenke in einem erfindungsgemäßen System,
- Fig. 2: ein Energieflußdiagramm zwischen Systemkomponenten mit unter-schiedlichen Energiequellen,
- Fig. 3: ein Nachrichtenflußdiagramm für einen Ladevorgang zwischen zwei NFC-Geräten,
- Fig. 4: eine schematische Darstellung der Komponenten einer Chipkarte mit aufladbarer Energiequelle,
- Fig. 5: eine Schnittzeichnung durch eine Anordnung von einem Kartenleser und einer Chipkarte mit mechanischer Positionierungshilfe,
- Fig. 6: eine Ansicht möglicher Benutzeranzeigen zur Unterstützung einer relativen Positionierung von 2 Einheiten,
- Fig. 7: eine Schnittzeichnung durch eine Anordnung von einem Kartenleser und einer Chipkarte mit optischer Positionierungshilfe, und
- Fig. 8: ein Signalspektrum eines Übertragungssignals und Angaben über eine maximal zulässige Signalstärke.

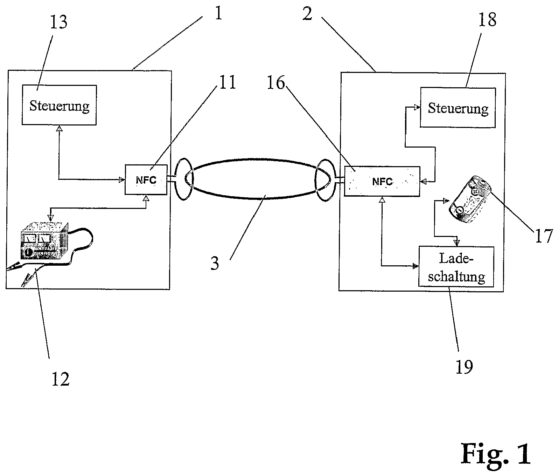

Fig. 1 zeigt eine erfindungsgemäße Anordnung mit zwei Geräten 1, 2, welche kontaktlos miteinander kommunizieren können.

Das erste Gerät 1 verfügt über eine kontaktlose Schnittstelle 11, welche beispielsweise als RFID-Schnittstelle oder als NFC-Schnittstelle ausgebildet ist, über eine Steuerung 13 (z. B. Mikroprozessor mit Software und Speicher), sowie über eine permanente Energiequelle 12 (Akkumulator mit großer Kapazität oder Netzspannungsversorgung). Das erste Gerät 1 kann beispielsweise ein RFID-Lesegerät, ein NFC-Gerät oder ein mobiles Endgerät, beispielsweise ein Mobilfunktelefon angeordnet in seiner Ladevorrichtung, sein.

Das zweite Gerät 2 besitzt eine kontaktlose Schnittstelle 16, welche beispielsweise als RFID-Schnittstelle oder NFC-Schnittstelle ausgebildet ist, sowie eine aufladbare Energiequelle 17, z. B. ein Akkumulator mit einer entsprechenden Ladeschaltung 19. Als zweites Gerät 2 kann ein Transponder, eine Dual-Interface-Chipkarte, ein NFC-Gerät oder ein mobiles Endgerät verwendet werden. Insbesondere kann in einem mobilen Endgerät die kontaktlose Schnittstelle durch ein SIM-Modul gebildet sein.

Zur kontaktlosen Kommunikation zwischen dem ersten Gerät 1 und dem zweiten Gerät 2 wird durch das erste Gerät 1 zumindest zeitweise ein hochfrequentes magnetisches Wechselfeld 3 erzeugt. Die über das magnetische hochfrequente Wechselfeld 3 an das zweite Gerät 2 übertragenen Energie wird typischerweise zunächst zur Bereitstellung der notwendigen Betriebsenergie des zweiten Gerätes verwendet. Bei Bedarf und sofern die übertragene Energie ausreicht, wird zumindest ein Teil der übertragenen Energie zum Laden der Batterie 17 verwendet. Es ist für ein erfolgreiches Laden notwendig das zweite Gerät 2 über einen längeren Zeitraum im Wirkbereich des hochfrequenten magnetischen Wechselfeldes 3 zu belassen. Als Wechselfeld 3 ist dabei besonders ein konstantes Feld geeignet, wie es z. B. von einem Lesegerät, oder einem NFC-Gerät in einem Betriebsmodus "beingreader" ausgesendet wird. Eine stattfindende Modulation des Feldes stellt hierbei kein Problem dar.

Zur Aktivierung des Ladevorganges sind verschiedene Möglichkeiten vorgesehen, die im Folgenden näher betrachtet werden.

Das zweite Gerät 2 als Energiesenke befindet sich in der Praxis meist nur kurze Zeit im Ansprechbereich des Lesegerätes oder NFC-Gerätes 1 als Energiequelle. So werden z. B. Geräte mit NFC-Schnittstelle in der Praxis nur zur Durchführung einer Datenübertragung in Kommunikationsreichweite gebracht und anschließend wieder voneinander entfernt. Ebenso werden kontaktlose Chipkarten in der Praxis nur für eine kurze Zeit in Reichweite eines RFID-Lesegerätes gebracht.

Das zweite Gerät 2 wird in das Feld 3 eines ersten Gerätes 1 eingebracht und dort über einen bestimmten Zeitraum belassen. Sobald sich das zweite Gerät 2 länger als eine definierte Zeitdauer tₘᵢₙ in dem hochfrequenten magnetischen Wechselfeld 3 mit einer zum Ladebetrieb ausreichenden Feldstärke H befindet, wird der Ladevorgang gestartet. Das Überwachen des Ablaufs der Zeitdauer tₘᵢₙ und das Starten des Ladevorgangs kann sowohl durch das erste Gerät 1 als auch durch das zweite Gerät 2 erfolgen. Die Zeit tₘᵢₙ kann dabei mit dem Eintritt in das Wechselfeld 3, insbesondere also nach einem ersten Datenaustausch zwischen den beiden Geräten 1 und 2, oder aber auch erst nach einer vollendeten Transaktion gemessen werden.

Es wird auf diesem Weg vermieden, daß für Energiesenken, die nur unbewußt in den Wirkungsbereich einer Energiequelle gebracht werden oder nach abgeschlossener Transaktion aus diesem Wirkungsbereich bewußt entfernt werden, ein Ladevorgang angestoßen wird. Weniger Ladevorgänge bedeuten für das ladende Gerät 1 weniger Verwaltungsaufwand für diese Vorgänge. Zudem entsteht eine geringere Ausfallzeit für eine Kommunikation mit Dritten, sofern diese in einem Lade-Betriebszustand eingeschränkt ist. Letztlich wird auch die Batterie 17 des zweiten Gerätes 2 vor unvollständigen Ladevorgängen geschützt, welche die Lebensdauer der Batterie 17 beeinflussen können.

Verzichtet man auf diese Vorteile, kann die Zeit tₘᵢₙ den Wert 0 annehmen, so dass ein Ladevorgang unmittelbar nach Eintritt des zweiten Gerätes 2 in ein Wechselfeld 3 begonnen wird.

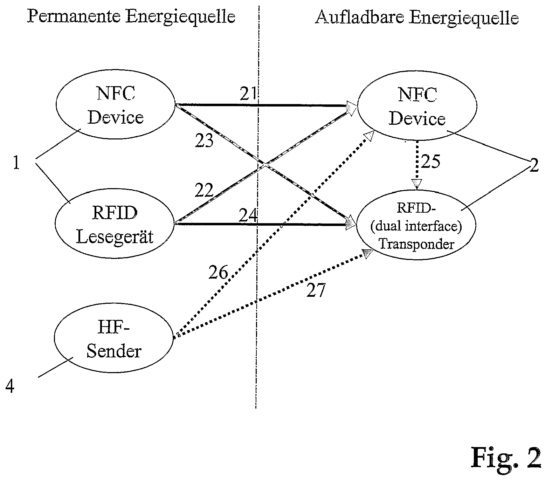

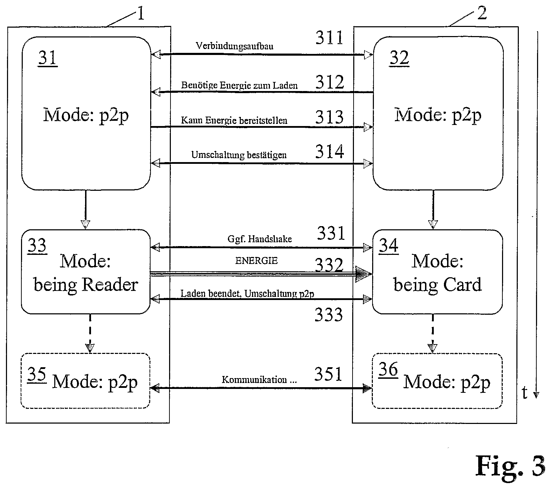

Ein weiterer Aspekt der vorliegenden Erfindung mit Bezug auf Fig. 2 und Fig. 3 beschrieben.

In den meisten bekannten Systemen ist a priori festgelegt, daß ein Gerät die Funktion der Energiequelle (Netzteil mit Sender) und ein zweites Gerät die Funktion des Energieverbrauchers (Handteil mit aufladbarem Akku) übernimmt. Bei kontaktlosen Geräten kann eine solche Festlegung jedoch fehlen. Hier treffen die unterschiedlichsten Geräte, wie NFC-Gerät, (dual-interface) Transponder und Lesegeräte, aufeinander, welche über unterschiedlichste Energiequellen verfügen.

Fig. 2 zeigt mögliche Kombinationen von Geräten für einen Ladevorgang. Permanente Energiequelle 1 und 4 sowie aufladbare Energiequellen 2 können als Beteiligte eines Ladevorganges 21 bis 27 auftreten. Der Energiefluß und somit die Information, welches der beteiligten Geräte als Energiequelle oder als Energiesenke auftritt, ist durch die Richtung der Pfeile 21 bis 27 dargestellt. Als permanente Energiequellen 1 und 4 sind ein NFC-Gerät 1, ein RFID-Lesegerät 1 und ein HF-Sender 4 vorgesehen, die jeweils nur als Energiequelle auftreten. Die aufladbaren Energiequellen 2, in Form eines NFC-Gerätes, eines RFID-Transponders oder einer Chipkarte, können sowohl als Energiequelle (Ladevorgang 25) als auch als Energiesenke (Ladevorgänge 21 bis 24 und 26,27) fungieren.

In derartigen komplexeren Systemen ist ohne weiteren Informationsaustausch nicht klar, ob ein Gerät in der Lage ist einem anderen Gerät Sendeenergie zum Aufladen eines Akkus zur Verfügung zu stellen, bzw. ob ein Gerät technisch in der Lage ist die empfangene Energie zum Laden eines Akkus zu verwenden. Wie im Folgenden näher beschrieben, wird eine Information über die Fähigkeiten des entsprechenden Gerätes ausgetauscht und die ausgetauschte Information zur Bestimmung der Rollenverteilung, welches Gerät als Quelle oder Senke agiert, verwendet.

Fig. 3 zeigt für zwei NFC-Geräte 1 und 2 eine Umschaltung des Betriebsmodus der Geräte 1, 2.

Bei NFC-Geräten ist ein Betriebsmodus "peer-to-peer" vorgesehen, in welchem die Geräte 1, 2 jeweils nur für eine kurze Zeitspanne ein Wechselfeld 3 aussenden, um ein Datenpaket an den jeweiligen Kommunikationspartner zu übertragen. Ein Ladebetrieb in einem zweiten Gerät 2 setzt jedoch ein konstantes Wechselfeld 3 - erzeugt durch das erste Gerät 1 - voraus.

Ein Verbindungsaufbau 311 erfolgt zwischen den Geräten 1 und 2 im Betriebsmodus p2p 31, 32. Erfindungsgemäß ist vorgesehen, bei einer Kommunikation 312, 313 zwischen den Geräten 1 und 2 Informationen über die Energieversorgung der Geräte auszutauschen. Die hierzu übertragenen Daten können Informationen über die Art der Energieversorgung, z. B. "aufladbare Energiequelle" oder "Netzversorgung", Informationen über den Ladezustand eines Akkumulators, z. B. "benötige Energie zum Laden", sowie Informationen über die Möglichkeit das konstante Wechselfeld 3 über einen längeren Zeitraum zur Verfügung stellen zu können, z. B. "Ladeenergie kann bereitgestellt werden", enthalten.

Des weiteren ist, insbesondere für NFC-Geräte, vorgesehen zur Bereitstellung des Feldes 3 den Betriebsmodus zumindest für die Dauer des Ladevorganges zu wechseln. Finden sich nach Austausch der Informationen über die Energieversorgung der Geräte 1, 2 ein zweites Gerät 2 mit dem Bedarf der Ladung, sowie ein erstes Gerät 1 mit der Möglichkeit das Feld 3 über einen längeren Zeitraum zur Verfügung zu stellen, so ist vorgesehen zwischen den beiden Geräten 1, 2 eine Umschaltung der Betriebsmodi herbeizuführen.

Erfindungsgemäß wechselt das erste Gerät 1 aus dem Betriebsmodus "peer-to-peer" (p2p) 31 in den Modus "being Reader" 33 und erzeugt damit ein konstantes Feld 3. Das zweite Gerät 2 wechselt erfindungsgemäß aus dem Betriebsmodus p2p 32 in den Modus "being Card" 34. In dem Betriebsmodus "being Card" 34 nützt das zweite Gerät 2 die von dem ersten Gerät 1 bereit gestellte Feldenergie zumindest teilweise zum Aufladen seines Akkumulators.

Optional erfolgt in diesen Betriebsmodi zunächst ein "Handshake", also ein initialer Austausch 331 von Daten. Nach einem Übertragen 332 der zum Aufladen erforderlichen Energie wird der Ladevorgang mit einem Dialog 333 zwischen den Geräten 1 und 2 abgeschlossen. In dem Dialog 333 kann unter anderem eine weitere Umschaltung aus den Betriebsmodus 33, 34 "being Card" und "being Reader" in den Betriebsmodus p2p 35, 36 für beide Geräte 1 und 2 vereinbart werden.

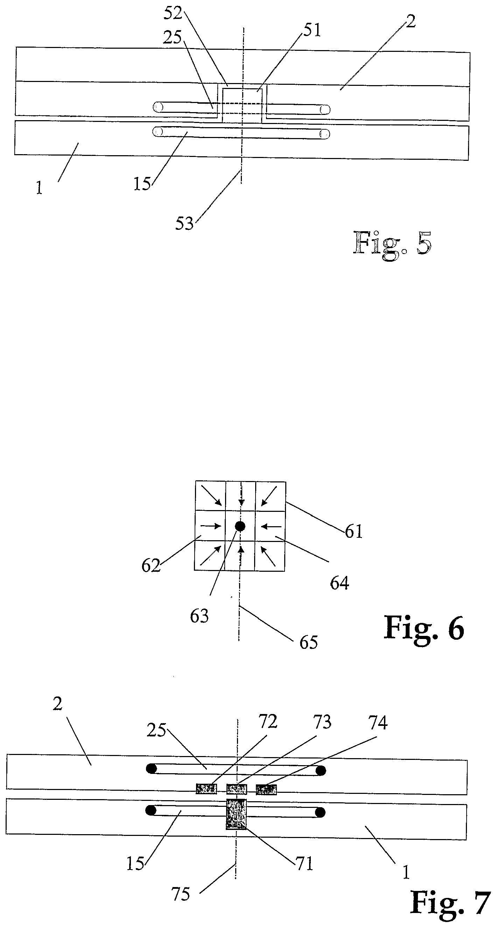

Wie unten mit Bezug auf Fig. 6 näher beschrieben, kann das erste Gerät 1 für den Schritt 332 der Energieübertragung zudem von einem Kommunikationsmodus in einen Energieübertragungsmodus schalten.

Im Folgenden werden ebenfalls mit Bezug auf Fig. 1 und 3 Lösungen für eine Einleitung und/oder Beendigung von Ladevorgängen beschrieben.

Um festzustellen, ob das Feld 3 noch benötigt wird, ist erfindungsgemäß vorgesehen zumindest in zyklischen Zeitabständen einen Handshake oder ein Polling zwischen den Geräten 1 und 2 durchzuführen. Somit wird erkannt, ob sich das zweite Gerät 2 noch in dem Bereich des Feldes 3 befindet, oder ob das zweite Gerät 2 bereits entfernt wurde.

Erhält das erste Gerät 1 auf einen Handshake-Request keine Antwort, oder trifft ein Pollingsignal über einen längeren Zeitraum nicht mehr bei dem ersten Gerät 1 ein (timeout), so kann davon ausgegangen werden, dass das zweite Gerät 2 aus dem Feld 3 entfernt wurde und das Feld 3 daher nicht mehr benötigt wird.

Ebenso ist vorgesehen, einen Status des Ladevorganges zwischen den Geräten 1 und 2 zu übertragen, so dass das erste Gerät 1 eine Information darüber erhält, wenn der Ladevorgang beendet ist und das Feld 3 nicht mehr benötigt wird.

Problematisch ist auch eine fehlende oder unterbrochene Energieversorgung des intelligenten zweiten Gerätes 2, beispielsweise durch einen entladenen Akkumulator 17. Handelt es sich bei der kontaktlosen Schnittstelle 16 des zweiten Gerätes 2 um eine Dual-Interface-Chipkarte (z. B. in einem Handy) oder um ein NFC-Device, so erfolgt die Stromversorgung der kontaktlosen Schnittstelle 16 normalerweise durch den Akkumulator 17.

Falls die vorhandene Energie des Akkumulators 17 noch ausreichend ist, das zweite Gerät 2 zu versorgen, ist erfindungsgemäß vorgesehen, dass durch die Steuerung 18 des zweiten Gerätes 2 festgestellt wird, ob der Akkumulator 17 geladen werden kann, oder muss. Bei Vorhandensein eines Feldes 3 bzw. eines ersten Gerätes 1 kann der Ladevorgang wie bereits beschrieben eingeleitet werden.

Falls die vorhandene Energie des Akkumulators 17 dagegen nicht mehr ausreicht, das zweite Gerät 2 mit Energie zum Betrieb zu versorgen, wird mit der dem Feld 3 entnommenen Energie zumindest die kontaktlose Schnittstelle 16 versorgt. Des weiteren ist vorgesehen, durch eine entsprechende Auswertung interner Signale des ersten Gerätes 2, ein Zustand "Akku leer" durch die kontaktlose Schnittstelle 16 zu erkennen und das Laden des Akkumulators 17 automatisch einzuleiten.

In einer besonders vorteilhaften Ausführungsform verfügt die kontaktlose Schnittstelle 16 über eigene Softwaremittel, um im Zustand "Akku leer" eine Kommunikation mit dem ersten Gerät 1 entsprechend der beschriebenen Abläufe einzuleiten. Eine solche Ausführungsform kann durch die Verwendung eines Dual-Interface-Chips als kontaktlose Schnittstelle 16 realisiert werden.

Um sicherzustellen, dass die Funktionsfähigkeit der kontaktlosen Schnittstelle 16 durch den Ladestrom in die Energiequelle 17 nicht beeinträchtigt wird, ist erfindungsgemäß vorgesehen, beispielsweise mittels der Ladeschaltung 19 die zur Verfügung stehende Energie entsprechend aufzuteilen.

Zur Einleitung des beschreiben Ladevorganges sind verschiedene Möglichkeiten vorgesehen.

Der Ladevorgang kann durch eine manuelle Aktivierung über ein Benutzerinterface eingeleitet werden. Hierzu ist es zweckmäßig, den Ladezustand der Energiequelle 17 dem Benutzer optisch anzuzeigen, wie dies heute bereits bei Mobilfunktelefonen der Fall ist.

Eine manuelle Einleitung eines Ladevorganges ist jedoch nur dann sinnvoll, wenn eine entsprechende Energiequelle verfügbar ist. Erfindungsgemäß ist daher vorgesehen, zumindest bei der Aktivierung eines entsprechenden Menüpunktes am Gerät 2, die Verfügbarkeit einer Energiequelle zu überprüfen und gegebenenfalls eine entsprechende Meldung auf einer Anzeigevorrichtung des Ersten Gerätes 2 auszugeben.

Alternativ kann der Ladevorgang auch automatisch eingeleitet werden.

So kann es bei einer immer ladbaren Energiequelle (Li-Ionen Akku) zweckmäßig sein, die Energiequelle grundsätzlich zu laden, sobald ein Feld 3 zur Verfügung steht. Einige Energiequellen können jedoch nicht zu einem beliebigen Zeitpunkt geladen werden (z. B. NiCd, NiMH), sondern erst nach Erreichen eines bestimmten Entladezustandes. Die automatische Einleitung des Aufladevorganges sollte daher abhängig von einem Typ des zu ladenden Akkumulators 17 und dessen Ladezustand erfolgen.

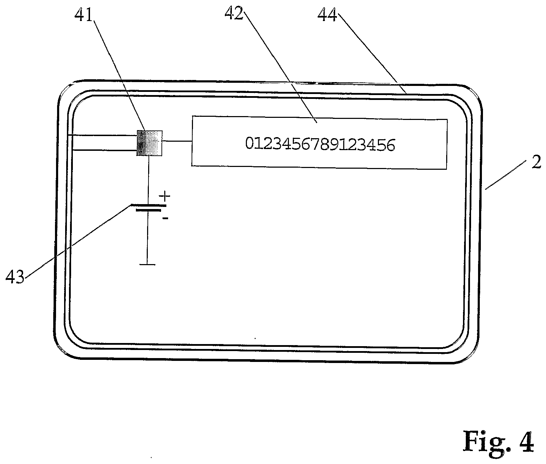

Fig. 4 zeigt einen tragbaren Datenträger als zweites Gerät 2, der erfindungsgemäß sowohl als Energiequelle als auch als Energiesenke eingesetzt werden kann. Der tragbare Datenträger 2 umfaßt einen Mikroprozessor 41, ein Display 42, eine aufladbare Batterie 43 und eine Antenne 44.

Im Folgenden werden - unter anderem mit Bezug auf die Fig. 5 bis 7 - weitere Aspekte der Erfindung, die zu einer erhöhten Effizienz der Energieübertragung beitragen können erläutert.

Die Kommunikation zwischen den zwei kontaktlosen Schnittstellen ist bereits bei einer geringen magnetischen Kopplung und damit einem großen Abstand möglich. So kann eine Dual-Interface-Chipkarte nach ISO 14443 z. B. über einen Abstand von 10 cm ausgelesen werden. NFC-Geräte können z. B. über eine Entfernung von 20 cm kommunizieren. Die zur Kommunikation benötigte Mindestfeldstärke kann daher zum Teil sehr niedrige Werte annehmen (ISO 14443: Ansprechempfindlichkeit eines Transponders nach Norm: Hₘᵢₙ < 1,5 A/m; typische Werte z. B. 0,75 A/m; ISO 15693: Ansprechempfindlichkeit eines Transponders nach Norm: Hₘᵢₙ < 0,15 A/m(!)).

Zur Einleitung und effizienten Durchführung eines Ladevorganges sind hingegen hohe Feldstärken (ISO 14443: zulässig sind 1,5 ... 7 A/m; kurzzeitig bis zu 12 A/m) erwünscht.

Um während des Ladevorganges eine möglichst effiziente Energieübertragung zu erreichen, wird eine möglichst gute magnetische Kopplung zwischen den Antennen der beiden Schnittstellen benötigt. Im Idealfall befinden sich die Antennen hierzu in geringst möglicher Entfernung nebeneinander, so dass die Antennen ein gemeinsame Achse bilden und nahezu aufeinander zu liegen kommen. In der Praxis ist es nötig, zwei Geräte 1 und 2 in der richtigen Position an- oder aufeinander zulegen. Um den Ladevorgang effektiv zu gestalten sind verschiedene Möglichkeiten vorgesehen.

Es besteht zwischen den beiden Geräten 1 und 2 bereits eine Kommunikationsbeziehung. Das zweite Gerät 2 hat einen Ladevorgang angefordert und eine entsprechende Bestätigung von dem ersten Gerät 1 erhalten, daß der Ladevorgang erfolgt. Erfindungsgemäß ist nun vorgesehen, eine magnetische Feldstärke H des Feldes 3 durch die Schnittstelle 16 des zweiten Gerätes 2 auszuwerten und dem Benutzer eine daraus resultierende Effizienz des Ladevorganges zu signalisieren.

Insbesondere ist vorgesehen, den Benutzer des Ersten Gerätes 2 bei einer schwachen Feldstärke aufzufordern, die Geräte 1 und 2 näher zusammenzubringen. Hierzu ist z. B. ein akustischer oder optischer Hinweis (Display-Nachricht) auf dem zweiten Gerät 2 vorgesehen.

Eine weitere, besonders bevorzugte Ausführungsform besteht in der Anzeige der Feldstärke H des Feldes 3 an der Schnittstelle 16, in Form einer optischen "Aussteuerungsanzeige", so dass der Benutzer der Geräte die Ausrichtung der Geräte zueinander optimieren kann.

Eine andere Ausführungsform besteht in der Anzeige der Feldstärke H des Feldes 3 am Interface 16, in Form einer akustischen "Aussteuerungsanzeige", z. B. durch eine feldstärkeabhängige Tonhöhe, so dass der Benutzer der Geräte die Ausrichtung der Geräte zueinander optimieren kann. Für eine weitere Optimierung der magnetischen Kopplung kann auch eine mechanische Führung verwendet.

Fig. 5 zeigt zwei Geräte 1 und 2, die mit Hilfe einer mechanischen Positionierungshilfe optimal zueinander ausgerichtet werden.

Das erste Gerät 1, welches insbesondere ein Kartenleser sein kann, umfaßt eine Antenne 15 seiner kontaktlosen Schnittstelle und eine Führungsnase 51. Das zweite Gerät 2, welches insbesondere eine Chipkarte gemäß Fig. 4 sein kann, umfaßt eine Antenne 25 seiner kontaktlosen Schnittstelle und eine Aussparung 52 zur Aufnahme der Führungsnase 51.

Erfindungsgemäß vorgesehen ist eine mechanische Führung oder Rastung derart, dass die Antennen 15, 25 der Geräte 1, 2 in geringst möglichem Abstand mittig aufeinander zu liegen kommen und ggf. eine gemeinsame Mittelachse 53 besitzen. Eine solche mechanische Rastung kann z. B. durch das Ausbilden der Nase 51 und der dazu passenden Aussparung 52 hergestellt werden. Die Nase 51 und die Aussparung 52 werden vorzugsweise jeweils im Mittelpunkt der Antennenspule 15, 25 angebracht. Der Benutzer führt die Geräte 1, 2 zusammen und richtet diese so aneinander aus, dass die Nase 51 in der Aussparung 52 einrastet.

Die Höhe der Nase 51, die Tiefe der Aussparung 52 und deren Grundflächen sollten insbesondere bei Verwendung einer Chipkarte als zweites Gerät 2 so klein sein, wie es zur Unterstützung der Ausrichtung möglich ist, damit die Chipkarte nicht in ihren sonstigen mechanischen Eigenschaften beeinflußt wird.

Zur Optimierung der magnetisch Kopplung kann, wie beispielsweise in Fig. 6 und 7 dargestellt, auch eine optische Positionierungshilfe verwendet werden.

Erfindungsgemäß weist dann ein erstes Gerät 1 einen optischen Geber 71 und ein zweites Gerät 2 einen optischen Empfänger 73 auf. Vorzugsweise sind die optischen Mittel jeweils im Mittelpunkt der Antennenspule 15, 25 angebracht. Dem Benutzer wird signalisiert, wenn die optischen Mittel 71, 73 zueinander ausgerichtet sind.

Weitere optische Empfänger 72, 74 können so angeordnet sein, dass ein geringer Versatz der Geräte 1, 2 in horizontaler Richtung durch die optischen Empfänger 72, 74 erkannt wird.

Dem Benutzer wird angezeigt in welche Richtung die Positionierung der Geräte 1, 2 vorgenommen werden muß, um eine optimale Ausrichtung der Spulen 15, 25 zueinander zu erreichen.

In Fig. 6 ist eine Matrix mit 9 Elementen dargestellt, die einer möglichen Anordnung von neun optischen Empfängern 62 bis 64 in dem zweiten Gerät 2 aus Fig. 7 entspricht. In der Matrix sind zudem optische Anzeigemöglichkeiten 61 dargestellt, die sich aus Signalen derart angeordneter optischer Empfänger ableiten lassen.

Die Pfeile auf der Anzeige 61 zeigen dem Benutzer an, in welcher Richtung die Geräte 1, 2 zueinander bewegt werden müssen, um eine optimale Aus-richtung der Spulen 15, 25 zueinander zu erwirken. Beispielsweise, wenn das zweite Gerät 2 aus Fig. 7 gegenüber dem ersten Gerät 1 nach rechts versetzt angeordnet ist, empfängt der optische Empfänger 64 aus der Matrix von Empfängern ein Signal und dem Benutzer wird ein nach links ausgerichteter Pfeil angezeigt.

In den mit Bezug auf Fig. 5 bis 7 beschriebenen Ausführungsformen kann entweder das erste Gerät 1 oder das zweite Gerät 2 die Energiequelle in einer erfindungsgemäßen Energieübertragung sein. Vorzugsweise ist der vorstehende Teil einer mechanischen Positionierungshilfe beziehungsweise ein optischer Empfänger einer optischen Positionierungshilfe auf Geräten mit permanenter Energiequelle angeordnet.

Der optische Geber 71 kann eine visuell sichtbare Lichtquelle sein, z. B. eine rote LED. Er kann ausgeschaltet sein, durchgehend leuchten oder in vorbestimmter Art blinken. Somit kann der optische Geber 71 in Abhängigkeit von dem Status eines Ladevorganges angesteuert werden, um einem Benutzer diesen Status zu signalisieren.

Der optische Geber 71 kann auch auf Geräten mit aufladbarer Energiequelle angeordnet sein. Er kann dann - beispielsweise als LED - durchgehend leuchten, wenn das Gerät als Energiesenke arbeitet, also ein Ladevorgang für die Energiequelle des Gerätes erfolgt. Weiterhin kann die LED in einer ersten Art blinken, um dem Benutzer das Vorliegen eines Ladegerätes - also einen möglichen Ladevorgang - optisch anzuzeigen. Das Gerät könnte beispielsweise zufällig in Kommunikationsreichweite mit dem Ladegerät gelangen und automatisch eine Kommunikationsbeziehung, mit Anfrage und Bestätigung eines möglichen Ladevorganges, aufbauen. Die daraufhin blinkend eingeschaltete LED signalisiert dem Benutzer, daß er sein Gerät aufladen kann, wenn er je nach Ausführungsvariante das Aufladen bestätigt und/ oder einfach das Gerät dort läßt, wo es ist. Die LED kann in einer zweiten Art blinken, wenn das Gerät als Energiequelle für einen Ladevorgang fungiert.

In einer besonders vorteilhaften Ausgestaltung ist die LED so in einer Chipkarte als erstes oder zweites Gerät angeordnet, daß die LED auf einer Seite der Chipkarte als optischer Geber gemäß Fig. 7 fungiert, aber gleichzeitig auf der anderen Seite der Chipkarte als Signal für den Benutzer erkennbar ist. So kann dem Benutzer beispielsweise der erfolgreiche Abschluß eines Ladevorganges, für welchen die LED dauerhaft eingeschaltet war, durch Ausschalten der LED signalisiert werden, wenn die Chipkarte einen transparenten oder semitransparenten Bereich in der Umgebung der LED aufweist. Das gleiche Ergebnis läßt sich durch einen transparenten Bereich in der Umgebung eines optischen Empfängers auf der Chipkarte erzielen bei Anordnung des optischen Gebers auf dem Kartenleser.

Eine weitere Möglichkeit besteht in der optischen Kennzeichnung der Lage einer nach außen nicht sichtbaren Antenne 15, 25 auf dem Gehäuse eines Ersten Gerätes 1, 2. So ist z. B. eine spezielle Farbmarkierung ("roter Punkt") oder ein spezielles Logo im Bereich der Antennen 15, 25 zur Markierung denkbar. Der Benutzer führt die Geräte 1, 2 zusammen und richtet diese so aneinander aus, dass sich die optischen Kennzeichnungen möglichst nahe aneinander befinden.

In den bisher beschriebenen Ausführungsbeispielen wurde zumindest implizit davon ausgegangen, daß das erste Gerät 1 ein intelligentes Gerät ist, also insbesondere bidirektional Daten austauschen und seinen Betriebszustand abhängig von den ausgetauschten Daten gestalten kann. Im Folgenden werden erfindungsgemäße Aspekte behandelt für ein erstes Gerät 4 aus Fig. 2, das nicht mit intelligenten Softwaremitteln, ausgestattet ist, so daß es keine Möglichkeit besitzt eine bidirektionale Kommunikationsbeziehung mit dem zweiten Gerät 2 aufzubauen.

In einer ersten Ausgestaltungsform verfügt das nicht intelligente Gerät 4 ausschließlich über einen Sender zum Erzeugen eines kontinuierlichen hochfrequenten magnetischen Wechselfeldes 3. Eine Modulation oder ein automatisches Abschalten des Feldes 3 ist nicht vorgesehen. Ein intelligentes zweites Gerät 2, welches in die unmittelbare Nähe eines entsprechenden ersten Gerätes 4 gelangt, muß dann den Ladevorgang einleiten.

In einer zweiten Ausgestaltungsform verfügt das nicht intelligente Gerät 4 über einen Sender zum Erzeugen eines kontinuierlichen hochfrequenten magnetischen Wechselfeldes 3 sowie über Hardwaremittel zum Erzeugen einer fest kodierten Modulation. Das entsprechend ausgestattete nicht intelligente Gerät 4 sendet in zyklischen Zeitabständen Daten aus. Ein solches Datum könnte z. B. ein definiertes 7-bit-Datum sein, wie es von ISO 14443-Lesegeräten auch als Request (REQUA) oder Wake-Up (WUPA) Kommando verwendet wird. Das intelligente zweite Gerät 2 wäre dadurch in der Lage, ein nicht intelligentes erstes Gerät 4 als "nicht intelligentes Gerät mit Ladefunktion" zu identifizieren. Des weiteren kann das nicht intelligente Gerät 4 mit optischen Mitteln ausgestattet sein, wie es zu den Fig. 6 und 7 beschreiben ist.

Weiterhin ist vorgesehen das nicht intelligente Gerät 4 nicht permanent zu betreiben, sondern erst bei Annäherung eines Transponders oder NFC-Gerätes 2 einzuschalten. Die Annäherung eines zweiten Gerätes kann dabei leistungslos detektiert werden. Beispielsweise in der Anmeldung WO 03/069538 A2 sind technische Möglichkeiten zur leistungslosen Detektion eines Transponders im Ansprechbereich eines Lesegerätes beschrieben. Eine weitere Möglichkeit besteht in der Verwendung mechanischer oder optischer Schaltvorrichtungen, welche z. B ausgelöst werden können, wenn ein Gerät 2 auf einen dafür vorgesehenen Bereich in dem Gerät 4, beispielsweise eine Ladeschale, gelegt wird.

Auch das nicht intelligente Gerät 4 sollte abgeschaltet werden, sobald ein Gerät 2 den Ladevorgang beendet oder das magnetische Feld 3 verlässt. Daher wird kontinuierlich die Amplitude des magnetischen Feldes, bzw. die elektrische Spannung an der Sendespule des Ersten Gerätes 4 gemessen. Wird ein Gerät 2 aus dem Nahbereich des Feldes 3 entnommen, so führt dies zu einer messbaren Schwankung der Feldstärke, bzw. der elektrischen Spannung an der Sendespule. Das Auftreten einer solchen Spannungsschwankung ("Dip") kann detektiert und als Steuersignal zum Ausschalten des Senders des nicht intelligenten Gerätes 4 eingesetzt werden. Ebenso können mechanische oder optische Schaltvorrichtungen verwendet werden, welche z. B ausgelöst werden, wenn ein Gerät 2 aus einem dafür vorgesehenen Bereich in dem Gerät 4 entnommen wird.

Nicht intelligente Geräte 4 werden durch das Aussenden eines kontinuierlichen magnetischen Feldes 3 die Kommunikation unter anderen intelligenten Geräten 1, 2 in der unmittelbaren Nachbarschaft (z. B. im Umkreis 0,2 bis 1m) stören oder verhindern. Daher soll das Vorhandensein eines kontinuierlichen magnetischen Feldes auf dem zweiten Gerät 2 angezeigt werden (z. B. durch einen Hinweis auf einem Display des Gerätes 2). Sofern ein Identifizierungsdatum, welches ein nicht intelligentes Gerät repräsentiert, von dem zweiten Gerät 2 empfangen wird kann auch das Vorhandensein eines solchen ersten Gerätes 4 für den Benutzer auf dem zweiten Gerät 2 angezeigt werden (z. B. durch einen Hinweis auf dem Display des Gerätes 2).

Nicht jede Kombination aus unterschiedlichen Geräten 1, 2 oder 4 , die eine Kommunikationsbeziehung ermöglicht, eignet sich auch zur Durchführung einer Aufladung eines Akkumulators.

In einer weiteren, besonders bevorzugten Ausgestaltung ist daher vorgesehen, grundsätzlich bei jedem Kommunikationsaufbau zwischen den Geräten 1, 2 Informationen über die Energieversorgung der Geräte auszutauschen. Die hierzu übertragenen Daten können Informationen über die Art der Energieversorgung, z. B. "aufladbare Energiequelle" oder "Netzversorgung", Informationen über den Ladezustand eines Akkumulators, z. B. "benötige Energie zum Laden", sowie Informationen über die Möglichkeit ein konstantes Wechselfeld 3 über einen längeren Zeitraum zur Verfügung stellen zu können, z. B. "Ladeenergie kann bereitgestellt werden", enthalten.

Weiterhin ist vorgesehen, zumindest für eine bestimmte Anzahl von zurückliegenden Kommunikationsbeziehungen zwischen verschiedenen Geräten, die empfangenen Informationen bezüglich der Energieversorgung auf dem zweiten Gerät 2 zu speichern. Insbesondere erste Geräte 1, die als Ladegerät eingesetzt werden können, sollen in einer Liste gespeichert werden. Als weitere Daten können z. B. der Gerätename, die Seriennummer (UID) der kontaktlosen Interface 11, aber auch Datum und Uhrzeit der letzten Kommunikationsbeziehung gespeichert werden.

Des weiteren ist erfindungsgemäß vorgesehen, dem Benutzer des zweiten Gerätes 2 den lesenden Zugriff auf diese Liste zu ermöglichen, um dadurch ein erstes Gerät 1 auffinden zu können, welches eine Ladefunktion unterstützt.

Die einzelnen teilweise zu verschiedenen Ausführungsformen genannten technischen Aspekte können, wie für den Fachmann erkennbar, auch miteinander kombiniert werden. Insbesondere können auch die im Folgenden beschriebene Umschaltung der Sendeleistung und deren Ausgestaltungsformen mit den bisher beschriebenen Aspekten kombiniert werden.

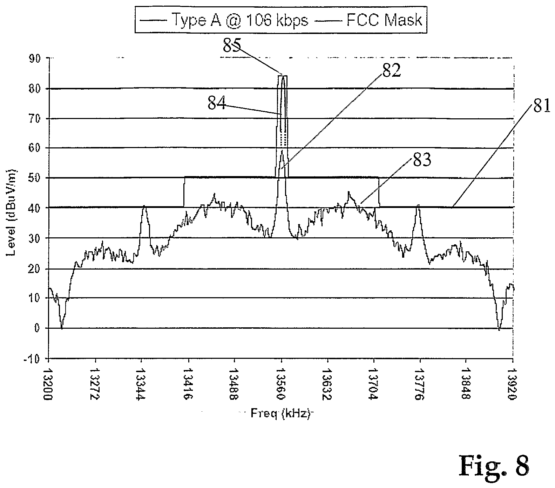

Wird ein Trägersignal eines RFID-Lesegerätes oder eines NFC-Devices als erstes Gerät 1 moduliert, um Daten zu einem zu zweiten Gerät 2 zu übertragen, so entstehen die in Fig. 8 gezeigten Seitenbänder 83 um das Trägersignal 82 herum. Sowohl das Trägersignal 82 als auch die Seitenbänder 83 dürfen mit der abgestrahlten Leistung nicht über den für diese Frequenzbänder definierten Grenzwerten 81 liegen. Die von den Modulationsseitenbändern 83 abgestrahlte Leistung steht dabei in ein einem festen Verhältnis zur Sendeleistung des Trägersignals 82, welche sich aus dem Modulationsgrad und dem Spektrum des Basisbandsignals (Modulationssignal) ergibt. Dies hat zur Folge, dass die Sendeleistung des Trägersignals 82 des ersten Gerätes 1 so weit abgesenkt werden muß, dass auch von den Modulationsseitenbändern 83 die Grenzwerte 81 nicht überschritten werden. Die für das Trägersignal 82 theoretisch mögliche maximale (magnetische) Feldstärke 85, kann daher bei weitem nicht ausgenutzt werden.

Erfindungsgemäß ist daher vorgesehen, während eines Ladevorganges zumindestens zeitweise, bevorzugt jedoch für einen möglichst langen Zeitraum die Datenübertragung vom dem ladenden Gerät 1 hin zu dem zu ladenden Gerät 2 auszusetzen. Da das erste Gerät 1 als Sender somit nicht mehr moduliert wird, also auch keine ausgeprägten Seitenbänder 83 entstehen, kann die Sendeleistung des Trägersignals 82 theoretisch bis auf den nach den Zulassungsvorschriften maximalen Wert 85 angehoben werden. Das nun ausgesendete Signal 84 weist eine signifikant höhere Feldstärke auf, so dass auf Seiten des zweiten Gerätes 2 als Empfänger eine signifikant höhere Leistung entnommen werden kann. Durch den dadurch ermöglichten höheren Ladestrom, kann die Aufladung eines Akkumulators in wesentlich kürzerer Zeit vorgenommen werden.

In einem Ladevorgang schaltet das erste Gerät 1 als Energiequelle von einem kombinierten Lade- und Kommunikationsmodus auf einen effizienteren Lademodus um. Der kombinierte Lade- und Kommunikationsmodus kann beispielsweise der übliche Betriebsmodus 33 aus Figur 3 sein. Der effiziente Lademodus kann ein kombinierter Lade- und Empfangsmodus sein, der dem ersten Gerät 1 weiterhin den Empfang von Daten ermöglicht, die das zweite Gerät 2 überträgt.

Für einen weiter optimierten Ladevorgang kann die Sendeleistung des ersten Gerätes 1 in mehreren Stufen gestaltet und entsprechend der jeweiligen Anforderungen zwischen diesen Stufen umgeschaltet werden. In einem Kommunikationsmodus ist die Sendeleistung so hoch gewählt, das eine bidirektionale Kommunikation möglich ist, aber doch so niedrig, daß nicht unnötig Energie für nur möglicherweise auftretende Ladevorgänge verbraucht wird. Während die Sendeleistung für einen kombinierten Lade- und Kommunikationsmodus noch eine bidirektionale Kommunikation erlaubt, ist die Sendeleistung in einem Lade- und Empfangsmodus bereits so hoch, daß ein Senden des ersten Gerätes 1 nicht mehr erlaubt ist.

Um den Ladevorgang zwischen Energiequelle und Energiesenke zu beenden, zumindest zeitweise zu unterbrechen oder zumindest zeitweise in einem weniger effizienten Modus fortzuführen, sind erfindungsgemäß verschiedene Varianten vorgesehen.

Will die Energiequelle, also das erste Gerät 1, den Ladevorgang beenden oder unterbrechen, so wird die erhöhte Sendeleistung 84 auf den im Kommunikationsbetrieb verwendeten Wert 82 reduziert. Das erste Gerät 1 schaltet wieder zurück in den Kommunikations- oder den kombinierten Kommunikations- und Lademodus. Anschließend kann mit dem zweiten Gerät 2 eine Kommunikation aufgebaut werden, um beispielsweise den Ladevorgang gänzlich zu beenden.

Erkennt das erste Gerät 1 beispielsweise durch Empfang eines entsprechenden Signals das Vorhandensein eines dritten Gerätes, für welches eine bidirektionale Kommunikation aufgebaut werden müßte, so kann es den Betriebsmodus für ein effizienteres Laden temporär verlassen. Nach Abschluß der bidirektionalen Kommunikation mit der dritten Einheit schaltet der erste Gerät 1 wieder zurück in den effizienteren Lademodus.

Will das zweite Gerät 2 den effizienten Ladevorgang beenden oder unterbrechen, so wird das zweite Gerät 2, beispielsweise mittels Lastmodulation unter Verwendung des Hilfsträgers, eine entsprechende Anfrage an das erste Gerät 1 übertragen. Darauf wird das erste Gerät 1 die erhöhte Sendeleistung 84 auf dem im Kommunikationsbetrieb verwendeten Wert 82 reduzieren. Anschließend kann wiederum eine Kommunikation zwischen den Geräten 1, 2 aufgebaut werden, um beispielsweise den Ladevorgang gänzlich zu beenden.

Ein weiteres Problem kann darin bestehen, dass das zu ladende Gerät 2 während des effizienten Ladevorganges aus dem magnetischen Feld des ersten Gerätes 1 entnommen wird. Erkennt das erste Gerät 1 diesen Zustand nicht, so würde es permanent mit erhöhter Sendeleistung weiter senden.

Um dies zu verhindern, wird das zweite Gerät 2 in zeitlichen Abständen, beispielsweise mittels Lastmodulation, Daten an das erste Gerät 1 übertragen. Bei diesen Daten kann es sich um ein einfaches Polling-Signal, um eine Information über den zeitlichen Abstand zum nächsten Signal, um eine eindeutige Identifikation des zu ladenden Gerätes, oder um eine Kombination daraus handeln. Wird diese Information über einen bestimmten Zeitraum (timeout) nicht mehr empfangen, so wird das sendende Gerät die erhöhte Sendeleistung 84 wieder auf den im Kommunikationsbetrieb verwendeten Wert 82 reduzieren. Anschließend kann versucht werden mit dem zweiten Gerät 2 eine erneute Kommunikationsbeziehung aufzubauen, sofern sich dieses noch im Ansprechfeld des ersten Gerätes 1 befindet.

Sollte das erste Gerät 1 in einem reinen Lademodus arbeiten, kann es in entsprechenden zeitlichen Abständen jeweils für einen minimalen Zeitraum in einen Modus geringerer Sendeleistung schalten, um Daten zu empfangen oder auszutauschen. Insbesondere kann das erste Gerät 1 ausgehend von dem reinen Lademodus die Sendeleistung kontinuierlich oder jeweils nur um eine der beispielsweise 4 Stufen verringern, um eine weitere Verringerung abhängig von den jeweils aktuell erkannten Anforderungen steuern.

## Patentansprüche

1. Verfahren in einem System mit zumindest zwei Einheiten zum kontaktlosen Aufladen eines Energiespeichers einer Energiesenke (2) durch eine Energiequelle (1), wobei zumindest eine der beiden Einheiten in einem ersten Betriebsmodus als Energiequelle und in einem zweiten Betriebsmodus als Energiesenke einsetzbar ist, mit folgenden Schritten:
Übertragen (331, 333) von Daten zwischen den zwei Einheiten;
Übertragen (332) einer für das Aufladen notwendigen Energie von der Energiequelle zu der Energiesenke;
wobei ein tragbarer Datenträger als die Energiequelle (1) auftritt;
**dadurch gekennzeichnet, daß**
die Energiequelle (1) die Energie zu der Energiesenke (2) kontaktlos über ein Wechselfeld überträgt, und
das Übertragen (331,333) von Daten und das Übertragen (332) von Energie über eine kontaktlose Schnittstelle (11) der Energiequelle (1) erfolgt.

2. Verfahren nach Anspruch 1 **dadurch gekennzeichnet, daß** in dem Schritt der Datenübertragung bestimmt wird, ob die zumindest eine Einheit in dem Schritt des Übertragens in dem ersten oder dem zweiten Betriebsmodus arbeitet.

3. Verfahren nach Anspruch 1 oder 2 **dadurch gekennzeichnet, daß** die übertragenen Daten eine Rolleninformation beinhalten, wobei die Rolleninformation angibt, ob die Einheit bevorzugt als Energiequelle oder Energiesenke betrieben werden soll.

4. Verfahren nach einem der Ansprüche 1 bis 3 **dadurch gekennzeichnet, daß** die übertragenen Daten einen Energiewert beinhalten, wobei der Energiewert angibt, welche Energiemenge die Einheit bereitstellen kann oder benötigt.

5. Verfahren nach einem der Ansprüche 1 bis 4 **dadurch gekennzeichnet, daß** in dem Schritt des Übertragens von Daten eine Rolleninformation von einer ersten der beiden Einheiten zu einer zweiten der beiden Einheiten übertragen wird, die zweite Einheit die empfangene Rolleninformation auswertet und abhängig von dem Auswertungsergebnis Zusatzinformationen für eine Entscheidung, ob ein Ladevorgang initiiert wird oder nicht, entweder empfängt oder sendet.

6. Verfahren nach einem der Ansprüche 1 bis 5 **dadurch gekennzeichnet, daß** die Energiequelle in einem ersten Lademodus keine Daten von der Energiequelle zu der Energiesenke überträgt und ein Wechselfeld mit einer Feldstärke erzeugt, die größer ist als eine mögliche Feldstärke bei gleichzeitiger Übertragung von Daten und Aufladeenergie.

7. Verfahren nach einem der Ansprüche 1 bis 6 **dadurch gekennzeichnet, daß** die Energiequelle erst nach Ablauf einer vorbestimmten minimalen Aufenthaltszeit der Energiesenke in dem Wechselfeld in den zweiten Betriebsmodus wechselt.

8. Verfahren nach einem der Ansprüche 1 bis 7 **dadurch gekennzeichnet, daß** einem Benutzer der Energiesenke die Effizienz des Aufladevorgangs signalisiert wird.

9. Verfahren nach Anspruch 8 **dadurch gekennzeichnet, daß** dem Benutzer die Effizienz des Aufladevorgangs optisch signalisiert wird.

10. Verfahren nach einem der Ansprüche 8 oder 9 **dadurch gekennzeichnet, daß** dem Benutzer die Effizienz des Aufladevorgangs akustisch signalisiert wird.

11. Verfahren nach einem der Ansprüche 8 bis 10 **dadurch gekennzeichnet, daß** die Effizienz des Aufladevorgangs bestimmt wird, aus dem Verhältnis einer aktuellen Aufladungsintensität zu einer maximal für einen Ladevorgang gemessenen Ladeintensität.

12. Verfahren nach einem der Ansprüche 8 bis 11 **dadurch gekennzeichnet, daß** die Effizienz des Aufladevorgangs bestimmt wird, als ein Verhältnis aus dem Aufladestrom zu der Feldstärke des Wechselfeldes der Energiequelle.

13. Verfahren nach einem der Ansprüche 1 bis 12 **dadurch gekennzeichnet, daß** die Energiesenke ein weiterer tragbarer Datenträger ist.

14. Verfahren nach einem der Ansprüche 1 bis 13 **dadurch gekennzeichnet, daß** der weitere tragbare Datenträger mittels einer mechanischen Führung der Energiequelle (1) im Verhältnis zu dieser positioniert wird.

15. Verfahren nach einem der Ansprüche 13 oder 14 **dadurch gekennzeichnet, daß** dem Benutzer Positionierungsinformationen für eine verbesserte Anordnung des weiteren tragbaren Datenträgers in Relation zu der Energiequelle (1) angezeigt wird.

16. Verfahren nach Anspruch 15 **dadurch gekennzeichnet, daß** der weitere tragbare Datenträger ein Positionssignal der Energiequelle (1) empfängt und auswertet, um dem Benutzer die Positionierungsinformationen anzuzeigen.

17. Verfahren nach einem der Ansprüche 13 bis 16 **dadurch gekennzeichnet, daß** der tragbare Datenträger in einem mobilen Endgerät mit wieder aufladbarer Batterie eingesetzt ist und gegenüber dem weiteren tragbaren Datenträger als Energiequelle (1) auftritt.

18. System mit einer Energiequelle (1) und einer Energiesenke (2) **dadurch gekennzeichnet, daß** für ein kontaktloses Aufladen eines Energiespeichers der Energiesenke (2) ein Verfahren nach einem der Ansprüche 1 bis 17 ausgeführt wird.

19. Vorrichtung zum kontaktlosen Aufladen eines Energiespeichers eines tragbaren Datenträgers **dadurch gekennzeichnet, daß** die Vorrichtung angepaßt ist, ein Verfahren nach einem der Ansprüche 1 bis 17 auszuführen.

## Claims

1. A method in a system with at least two units for the contactless charging of an energy storage of an energy sink (2) by an energy source (1), wherein at least one of the two units can be used as energy source in a first operation mode and as energy sink in a second operation mode, with the following steps of:
transferring (331, 333) data between the two units;
transferring (332) an energy required for charging from the energy source to the energy sink;
wherein a portable data carrier acts as the energy source (1);
**characterized in that**
the energy source (1) transfers the energy to the energy sink (2) in contactless manner via an alternating field, and
the transfer (331, 333) of data and the transfer (332) of energy are effected via a contactless interface (11) of the energy source (1).

2. The method according to claim 1, **characterized in that** in the step of data transfer it is ascertained whether the at least one unit is operating in the first or the second operation mode in the step of transfer.

3. The method according to claim 1 or 2, **characterized in that** the transferred data include a role information, where in the role information indicates whether the unit is to be operated preferably as energy source or energy sink.

4. The method according to any one of claims 1 to 3, **characterized in that** the transferred data include an energy value, wherein the energy value indicates the amount of energy that can be made available or that is required by the unit.

5. The method according to any one of claims 1 to 4, **characterized in that** in the step of transferring data a role information is transferred from a first one of the two units to a second one of the two units, the second unit evaluates the received role information, and, in dependence on the evaluation result, either receives or sends additional information for a decision on whether a charging process is initiated or not.

6. The method according to any one of claims 1 to 5, **characterized in that** the energy source in a first charging mode does not transfer data from the energy source to the energy sink and generates an alternating field with a field strength which is greater than a possible field strength during simultaneous transfer of data and charging energy.

7. The method according to any one of claims 1 to 6, **characterized in that** the energy source changes to the second operation mode only after the expiration of a predetermined minimum residence time of the energy sink in the alternating field.

8. The method according to any one of claims 1 to 7, **characterized in that** the efficiency of the charging process is signaled to a user of the energy sink.

9. The method according to claim 8, **characterized in that** the efficiency of the charging process is optically signaled to a user.

10. The method according to any one of claims 8 or 9, **characterized in that** the efficiency of the charging process is acoustically signaled to the user.

11. The method according to any one of claims 8 to 10, **characterized in that** the efficiency of the charging process is ascertained from the ratio of a present charge intensity to a maximally measured charge intensity for a charging process.

12. The method according to any one of claims 8 to 11, **characterized in that** the efficiency of the charging process is ascertained as a ratio of the charging current to the field strength of the alternating field of the energy source.

13. The method according to any one of claims 1 to 12, **characterized in that** the energy sink is a further portable data carrier.

14. The method according to any one of claims 1 to 13, **characterized in that** the further portable data carrier is positioned relative to the energy source (1) by means of a mechanical guide of said energy source.

15. The method according to any one of claims 13 or 14, **characterized in that** positioning information for an improved arrangement of the further portable data carrier relative to the energy source (1) is indicated to the user.

16. The method according to claim 15, **characterized in that** the further portable data carrier receives and evaluates a position signal of the energy source (1), in order to indicate the positioning information to the user.

17. The method according to any one of claims 13 to 16, **characterized in that** the portable data carrier is inserted in a mobile terminal with rechargeable battery and acts as energy source (1) vis-à-vis the further portable data carrier.

18. A system with an energy source (1) and an energy sink (2), **characterized in that** for a contactless charging of an energy storage of the energy sink (2) a method in accordance with any one of claims 1 to 17 is executed.

19. An apparatus for the contactless charging of an energy storage of a portable data carrier, **characterized in that** the apparatus is adapted to execute a method according to any one of claims 1 to 17.

## Revendications

1. Procédé dans un système comprenant au moins deux unités de chargement sans contact d'un accumulateur d'énergie d'un puits d'énergie (2) par une source d'énergie (1), cependant qu'au moins une des deux unités peut, dans un premier mode de fonctionnement, être mise en oeuvre comme source d'énergie, et, dans un deuxième mode de fonctionnement, être mise en oeuvre comme puits d'énergie, comprenant les étapes suivantes :
transmission (331, 333) de données entre les deux unités ;
transmission (332) d'une énergie nécessaire au chargement, de la source d'énergie au puits d'énergie ;
cependant qu'un support de données portable entre en action comme source d'énergie (1) ;
**caractérisé en ce que**
la source d'énergie (1) transmet l'énergie au puits d'énergie (2) sans contact par l'intermédiaire d'un champ alternatif ; et
la transmission (331, 333) de données et la transmission (332) d'énergie a lieu par l'intermédiaire d'une interface (11) sans contact de la source d'énergie (1).

2. Procédé selon la revendication 1, **caractérisé en ce que**, lors de l'étape de la transmission de données, il est déterminé si la au moins une unité, lors de l'étape de la transmission, travaille dans le premier ou le deuxième mode de fonctionnement.

3. Procédé selon la revendication 1 ou 2, **caractérisé en ce que** les données transmises contiennent une information sur le rôle, cependant que l'information sur le rôle indique si l'unité doit être de préférence exploitée comme source d'énergie ou comme puits d'énergie.

4. Procédé selon une des revendications de 1 à 3, **caractérisé en ce que** les données transmises contiennent une valeur d'énergie, cependant que la valeur d'énergie indique quelle quantité d'énergie l'unité peut mettre à disposition ou nécessite.

5. Procédé selon une des revendications de 1 à 4, **caractérisé en ce que**, lors de l'étape de la transmission de données, une information sur le rôle est transmise d'une première des deux unités à une deuxième des deux unités, **en ce que** la deuxième unité évalue l'information sur le rôle reçue, et, en fonction du résultat de l'évaluation, soit reçoit, soit envoie des informations supplémentaires destinées à décider si un processus de chargement est initié ou non.

6. Procédé selon une des revendications de 1 à 5, **caractérisé en ce que** la source d'énergie, dans un premier mode de fonctionnement, ne transmet pas de données de la source d'énergie au puits d'énergie et génère un champ alternatif à une intensité de champ qui est supérieure à une intensité possible de champ lors d'une transmission simultanée de données et d'énergie de chargement.

7. Procédé selon une des revendications de 1 à 6, **caractérisé en ce que** la source d'énergie ne passe au deuxième mode de fonctionnement qu'après écoulement d'un temps minimum prédéterminé de demeure du puits d'énergie dans le champ alternatif.

8. Procédé selon une des revendications de 1 à 7, **caractérisé en ce que**, à un utilisateur du puits d'énergie, l'efficacité du puits d'énergie est signalisée.

9. Procédé selon la revendication 8, **caractérisé en ce que**, à l'utilisateur, l'efficacité du processus de chargement est signalisée optiquement.

10. Procédé selon une des revendications 8 ou 9, **caractérisé en ce que**, à l'utilisateur, l'efficacité du processus de chargement est signalisée acoustiquement.

11. Procédé selon une des revendications de 8 à 10, **caractérisé en ce que** l'efficacité du processus de chargement est déterminée, à partir du rapport entre une intensité actuelle de chargement et une intensité de chargement mesurée au maximum pour un processus de chargement.

12. Procédé selon une des revendications de 8 à 11, **caractérisé en ce que** l'efficacité du processus de chargement est déterminée, en tant qu'un rapport du courant de chargement relativement à l'intensité de champ du champ alternatif de la source d'énergie.

13. Procédé selon une des revendications de 1 à 12, **caractérisé en ce que** le puits d'énergie est un autre support de données portable.

14. Procédé selon une des revendications de 1 à 13, **caractérisé en ce que** l'autre support de données portable est positionné au moyen d'un guidage mécanique de la source d'énergie (1) par rapport à cette dernière.

15. Procédé selon une des revendications 13 ou 14, **caractérisé en ce que**, à l'utilisateur, des informations de positionnement destinées à un agencement amélioré de l'autre support de données portable par rapport à la source d'énergie (1) sont indiquées.

16. Procédé selon la revendication 15, **caractérisé en ce que** l'autre support de données portable reçoit et évalue un signal de position de la source d'énergie (1) afin d'indiquer à l'utilisateur les informations de positionnement.

17. Procédé selon une des revendications de 13 à 16, **caractérisé en ce que** le support de données portable est mis en oeuvre dans un terminal mobile à batterie rechargeable et entre en action comme source d'énergie (1) vis-à-vis de l'autre support de données portable.

18. Système ayant une source d'énergie (1) et un puits d'énergie (2), **caractérisé en ce que**, pour un chargement sans contact d'un accumulateur d'énergie du puits d'énergie (2), un procédé selon une des revendications de 1 à 17 est exécuté.

19. Dispositif de chargement sans contact d'un accumulateur d'énergie d'un support de données portable, **caractérisé en ce que** le dispositif est adapté à exécuter un procédé selon une des revendications de 1 à 17.
